# EUROPEAN PATENT SPECIFICATION

(11) **EP 4 302 250 B1**
(45) Date of publication and mention of the grant of the patent: **14.01.2026**
(21) Application number: 22709695.5
(22) Date of filing: 01.03.2022
(51) Int. Cl.: G06Q 10/08, B65C 1/02, B65G 49/08

(54) **METHOD FOR CONSIGNEE-SPECIFIC INDIVIDUALIZING OF A NON-INDIVIDUALIZED PRODUCT OR A NON-INDIVIDUALIZED PRODUCT BUNDLE AND A DEVICE FOR CARRYING OUT THE INDIVIDUALIZATION STEP OF THE METHOD**
VORRICHTUNG UND VERFAHREN ZUR EMPFÄNGERSPEZIFISCHEN INDIVIDUALISIERUNG EINES NICHT-INDIVIDUALISIERTEN PRODUKTS ODER EINES NICHT-INDIVIDUALISIERTEN PRODUKTBÜNDELS
DISPOSITIF ET PROCÉDÉ POUR L'INDIVIDUALISATION SPÉCIFIQUE AU DESTINATAIRE D'UN PRODUIT NON INDIVIDUALISÉ OU D'UN ENSEMBLE DE PRODUITS NON INDIVIDUALISÉS

(30) Priority: 01.03.2021 DE 102021104892
(43) Date of publication of application: 10.01.2024
(73) Proprietor: SAINT-GOBAIN ISOVER, 92400 Courbevoie (FR)
(72) Inventor: LU, Suikai, 1130 Wien (AT)
(74) Representative: Kuhnen & Wacker Patent- und Rechtsanwaltsbüro PartG mbB
(86) International application number: PCT/EP2022/055093
(87) International publication number: WO 2022/184686

(56) References cited:
- US-A1- 2007 038 673
- US-A1- 2009 317 161
- US-A1- 2016 376 047
- US-A1- 2017 152 070

## Description

The invention relates to a method for consignee-specific individualizing of a non-individualized product or a non-individualized product bundle according to the preamble of claim 1 and a device for carrying out the individualization step of the method according to the preamble of claim 11.

It is common, in particular in the area of manufacturing construction materials but also in other industries, to store manufactured products, e.g., mineral wool webs or mineral wool slabs, pre-assembled and combined into bundles on shipping pallets and to keep said products ready for delivery to consignees. Consignees may be end customers supplied directly by the manufacturer or also other downstream entities in a delivery chain, which entities are meant to be the consignees of a defined volume of pre-assembled products or product bundles. Said entity may also be just an intermediary consignee of such products or product bundles.

The starting point for the present invention is a plurality of individual products or product bundles that are stored at storage locations (open spaces or racks) and, for example, have a ready-to-ship manufacturing status. However, in this state, the products and/or product bundles are not yet individualized to the extent that a specific consignee is assigned to the stocked products and/or product bundles.

In prior art, however, it is common to store already pre-assembled and commissioned products and/or product bundles that also already have a consignee-specific individualization in the form of an address label with barcode or the like. Then, when the goods, i. e., the products or product bundles, are to be loaded onto a transport means for a certain consignee, it takes considerable effort to select exactly those products or product bundles from a plurality of stored products or product bundles that are designated for this consignee.

In particular with outdoor storage yards it is possible that an area must first be cleared to even be able to access the particular, already consignee-specifically individualized products and/or product bundles by means of a handling and/or transporting device and specifically transport said product and/or product bundles to a transport means. This represents a considerable logistical effort and is to be improved according to the invention.

As already mentioned above, the starting point of the invention is a storage location, e.g., an outdoor storage or a high-bay warehouse, in which ready-to-ship pre-assembled products or product bundles are stored. Based on this, it is the object of the invention to provide a method for consignee-specific individualizing of products and/or product bundles that are to be transferred from a warehouse to a transport means, e.g., a truck, a ship, a freight car for railway transportation (goods wagon), a cable car, a ropeway carriage, a magnetic levitation system or an airplane.

Was, M.: Logistic label applicator - a proven solution. Blog-Etisoft <https://blog.etisoft.eu/logisticlabel-applicator-for-marking-ofpallets-and-other-collectivepackaging/>ln: <web.archive.org> of 30.12.2020 discloses a stationary logistic label applicator having an application arm being within its reach area capable to mount a label on a surface of an object, which is movable along a predefined route (i.e. a conveyor) relative to the stationary logistic label applicator. Thus the route has to be predefined in a way that at least a part of the route leads through the reach area of the application arm.

US 2016/376047 A1 discloses a method and a device for consignee-specific individualizing of products, wherein labels are generated by a label printer and are applied to the products and serve as ndividualization means.

Furthermore, the method according to the invention is intended to make significantly simplified logistical processes achievable. Furthermore, only those products and/or product bundles that are designated for a predetermined consignee are to be transferred to the transport means in a process-safe manner and incorrect loading of the transport means are to be avoided.

Another object of the invention is to provide a device with which the individualization step of the method according to the invention can be executed in a simple and cost-effective manner.

In regards to the method, the objects are solved by a method having the features of claim 1. Advantageous embodiments are recited in the dependent claims.

In regards to the device, the objects are solved by an apparatus having the features of claim 16. Advantageous embodiments are recited in the dependent claims.

A method according to the invention comprises the features of claim 1.

With the method according to the invention it is possible to individualize in a consignee-specific manner similar products or product bundles that are stocked in a storage location while said products or product bundles are transported to a transport means. This results in a particular advantage, namely that at the storage location there is no need to select certain products that are already assigned to a consignee and pick up and correctly load exactly these products and/or product bundles. The method according to the invention is in particular suitable for products and product bundles that are in essence always the same and have not been subject to consignee-specific consignment but a standard consignment such as pallets with a defined number of products, e.g., building materials, in particular bricks, mineral wool rolls, mineral wool slabs, cement bags and the like. The method according to the invention can of course be used with a wide variety of products/product bundles. The consignee-specific individualization on the way, in particular, from the storage location to the transport means thus represents a considerable logistical simplification and allows for optimized use of the storage location or storage areas.

For the purpose of the invention, products/product bundles are all objects or combinations of objects on shipping pallets, for example, or in other transport devices such as IBC containers that are ready for delivery and only need consignee-specific information to be assigned to the correct consignee. In particular general cargo and bulk cargo, whereby the latter may be in suitable bulk cargo containers and/or IBC containers (in the case of liquids or flowable and/or free-flowing bulk cargo).

According to an advantageous embodiment, the non-individualized products or the non-individualized product bundles are stocked or stored pre-commissioned and ready for transportation.

According to this advantageous embodiment, large volumes of non-individualized product or non-individualized product bundles, for example, can be stored ready for delivery, e.g., ready for transportation, without a loading employee or a loading apparatus having to select specific products or specific product bundles to assign those to a specific consignee.

For the purpose of the invention, transport means refers in particular to long distance transport means such as land vehicles, maritime vessels or aircrafts, in particular trucks, freight cars for railway transportation (goods wagons), cable cars, ropeway carriages, magnetic levitation systems, ships or airplanes. More particularly, transport means refer to such means that are capable to deliver a product or a product bundle from a manufacturer or from an intermediate entity of a delivery chain to a downstream consignee. Explicitly not covered are transport means that, e.g., transport a product or a product bundle within the factory premise of a manufacturer or an intermediate entity. It is the object of the invention, to handle products or product bundles that are stored at a storage location and that are to be assigned to a plurality of consignees, in an optimized manner. Such a situation does not exist when a transporting apparatus transports a product or product bundle from location A to location B. In such a case there is no change of consignees, but the consignor and the consignee remain the same. Only the location is a different one. The solution according to the invention explicitly does not refer to this.

According to another advantageous embodiment, the handling step already comprises selecting a single product or product bundle from the plurality of non-individualized products or non-individualized product bundles for the purpose of handling by means of the handling and/or transporting device.

The handling and transporting device according to the invention carries out the handling step according to the invention of the product or product bundle while the consignee-specific individualization takes places.

The handling step explicitly not only includes a contacting handling in the sense of picking up, lifting, transporting and lowering, but already a time span prior to the actual contacting handling where, for example, the single product or the single product bundle, which is to be handled next, was selected by the handling and transporting device. For the purpose of the invention, handling in this context means that during this step a touching contacting handling does not necessarily take place, but a preselecting the singular product is already sufficient so that already at this point a consignee-specific individualization can be carried out, even if a contacting handling does not yet take place.

In another advantageous embodiment, the handling step also comprises a period after the transfer, e.g., placing the non-individualized product or the non-individualized product bundle in the transport means or on the transport means during which the handling and transporting device can still act on the non-individualized product or the non-individualized product bundle.

The handling step also includes a period after the contacting/touching handling by the handling and transporting device, for example, when a product or a product bundle that is on a pallet, for example, has already been transferred from the storage location into the transport means and has already been placed there. **In** a certain period after this placing, as long as the handling and transporting device is still able to interact with the product/product bundle, this period is also still included in the handling step, although a contacting or touching or even transporting handling does no longer take place. It may be advantageous during this time as well to apply the consignee-specific individualization by means of the handling and transporting device. According to the invention, this period is therefore also to be included.

In an especially simple manner, in particular the time span during which the handling and/or transporting device actually transports the product or the product bundle can be used to carry out the consignee-specific individualization.

The consignee-specific individualization is accomplished in an advantageous manner by applying/attaching an individualization means, e.g., a label having consignee information on the product or the product bundle.

This measure is a well-established and particularly reliable way of applying an individualization means. Additionally, a label or label printer is easily carried along with the handling and transporting device.

According to another advantageous embodiment, the non-individualized product or the non-individualized product bundle is stocked in an FIFO or LIFO warehouse.

The invention allows stocking the not yet individualized product bundles and the not yet individualized products in a warehouse, e.g., an FIFO or LIFO warehouse, in a simple manner, since the invention makes it possible to arbitrarily assign storage locations because during the storage state of the products and product bundles consignee-specific information is not yet present.

In another advantageous embodiment of the invention, the handling/transporting is accomplished by means of an industrial truck or a lifting device.

Such implementations of the handling and transporting device have proven themselves and are preferred and reliable ways for handling/transporting.

In another embodiment, for individualization of the product or the product bundle, the handling and transporting device has an individualization apparatus, e.g., a label printer and/or a label applicator and the individualization is accomplished by means of the individualization apparatus during the handling step of the product or the product bundle by the handling and transporting device.

This particular embodiment has the advantage that a relative speed between the product and/or the product bundle and the handling/transporting device is particularly low, since, during transport, the product and/or product bundle participates in the movement of the handling/transporting device so that a synchronous movement takes place. This increases the positioning accuracy of a label.

With the method, the individualization can be accomplished in an advantageous manner prior to the transfer of the product or the product bundle to the transport means.

The above measure is also advantageous because the product and/or the product bundle is present without consignee-specific individualization as long as possible to that short-term changes, e.g., other delivery priorities, can be taken into account.

According to another advantageous embodiment, after selecting a non-individualized product or product bundle, the individualization by the individualization apparatus on the transporting device is accomplished while still in the warehouse, in particular in the FIFO or LIFO warehouse, preferably after the product or product bundle is picked up by the handling and transporting device.

With this measure, it is of particular advantage that possibly existing monitoring devices that monitor the storage location can be used to enable documenting a monitoring of the application of the consignee-specific individualization.

According to a particular embodiment, consignee-specific individualization means are generated by means of the individualization equipment.

It is particularly advantageous that individualization means are only generated by means of the individualization equipment, which is present on the handling/transporting device, when they are needed. This can be advantageous when, for example, short-term changes in the transporting order and the delivery to consignees other than those originally intended are to be implemented in real time. In contrast, in the case of carrying pre-made individualization means, the order of labeling cannot be changed so easily.

Expediently, several products or product bundles are individualized by the transporting device during the handling step.

It is sensible that, in the event several products or product bundles are transported/handled, a plurality of products/product bundles can be individualized during the transport, in particular during the handling step. This facilitates timeoptimized individualization.

In a particular embodiment of the invention, the method is used with solid objects, stackable solid objects, juxtaposable solid objects, such as stacked or juxtaposed mineral wool slabs, gypsum plaster boards or insulating boards, bundles of building materials, bundles of mineral wool rolls, bundles of mineral wool slabs, bundles of gypsum plaster boards, bundles of insulating boards, bundles of solid objects, containers, particularly IBC containers, the containers being empty or at least partially containing bulk, free-flowing products or liquids to be individualized.

Solid objects may be a single solid object being positioned on a single transportation means such as a palette or any other suitable transportation platform or a plurality of solid objects being juxtaposed and/or stacked on a transportation means such as a pallet or any other suitable transportation platform.

Stackable and/or juxtaposable objects may for example be containers, boxes, sacks, barrels, bags, cans and/or buckets which are empty or at least partially filled with products to be individualized or being themselves the products to be individualized.

Such products/product bundles are often stocked in larger amounts in a warehouse and can be individualized for the consignee with the method according to the invention during the handling step in an easy and time-saving manner.

A second aspect of the invention relates to a device for carrying out the individualization step of the method according to any of the preceding claims, the device comprising the features of claim 11.

According to the second aspect of the invention, an enhanced handling and transporting device is created as a result, which, apart from handling/transporting the product, can additionally also carry out the consignee-specific individualization during the handling of the product/the product bundle, wherein, moreover, the individualization means are generated on the spot in the area where the handling/transporting device moves. This represents maximum flexibility and high cost-saving potential. Furthermore, the same advantages can be enjoyed as those offered by the method according to the invention.

According to an advantageous embodiment of the invention, the individualization means are SSCC labels or GS1 labels. The coding of SSCC labels are an integral part of GS1 labels, which are also used for tracking and tracing.

SSCC labels did not prove successful for any specific individualization.

According to another advantageous embodiment of the invention, the device comprises receiving equipment for consignee-specific information.

To receive consignee-specific information, to be able to realize the preparation of the individualization means on the spot, it is expedient to provide appropriate receiving equipment on the handling and transporting device, which, if necessary, is supplied with the relevant information from a central server by means of a wireless connection.

In a another advantageous embodiment of the invention, the application device comprises a pivot or swivel arm and/or a linearly displaceable lifting plunger and/or an applicator carrier that is adapted to move in a freely programmable spatial path.

For the mechanical realization of the application device according to the invention, the same may, for example, be provided with a pivot or swivel arm which alternatively or additionally comprises a linearly displaceable lifting plunger. Of course, an applicator carrier that is adapted to move along a freely programmable spatial path may also be advantageous, in particular where the consignee-specific individualization must be applied in areas that are difficult to access. The above measures provide a cost-effective and mechanically reliable system for realizing the idea of the invention.

In another embodiment, the individualization means, in particular the labels, is adapted to be temporarily fixed to the applicator carrier by means of adhesion or vacuum and is releasable from the applicator carrier.

In the following, the invention is explained in more detail by way of example with reference to the drawing. In the figures:
Figure 1 schematically shows a sequence of a method according to the invention;
figure 2 shows a block diagram with the steps of an example of the method according to the invention;
figure 3 shows an embodiment of a device according to the invention for carrying out the individualization step according to the invention.

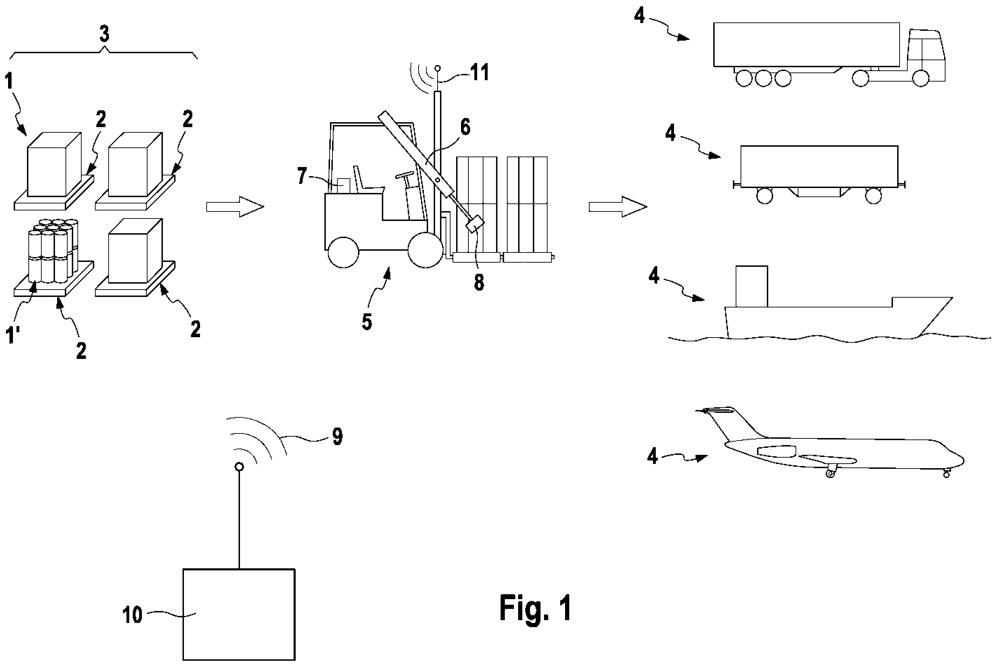

Figure 1 shows schematically and in overview the sequence of the method for consignee-specific individualizing of a non-individualized product 1 or a non-individualized product bundle 1' according to the invention.

Such products 1/product bundles 1' are, for example, stored on transport aids, i.e. transportation platforms such as pallets 2 in the area of a storage location 3. The storage location 3 may be an open space, a high-bay warehouse or an FIFO or LIFO warehouse or other storage concept.

The products 1/product bundles 1' stored there are already commissioned and packed ready-to-transport and/or ready-to-ship so that they, without further consignment or packaging steps, can be transferred to a transport means 4, with which the products 1/product bundles 1' can be transported to a consignee. The products 1/product bundles 1' in the area of the storage location are only missing a consignee-specific individualization, e.g. a consignee-specific marking, to facilitate an assignment of the appropriate products 1/product bundles 1' to a consignee.

The products 1/product bundles 1' are picked up with a handling and transporting device 5, which in the embodiment according to figure 1 is, for example, a forklift, from the storage location 3 and moved to the transport means 4, which expediently are already waiting.

The handling and transporting device 5 is equipped with an individualization apparatus 6 of an application device that comprises a label printer 7 and a label applicator 8, for example. Thus, the individualization apparatus 6 can provide individualization means, e.g. labels (not shown in figure 1), that, during the handling step of the products 1/product bundles 1', are generated in or on the handling and transporting device 5, e.g. in the industrial truck, in particular in the forklift, and that can be applied to the product 1/product bundle 1'.

Consignee information 9 required for this purpose can, for example, be transmitted over radio frequency from a memory 10 to receiving equipment 11 of the handling and transporting device 5. Based on this consignee information 9, the individualization means, e.g., labels, are generated in a consignee-specific manner and applied to the product 1/product bundle 1' by means of the label applicator 8 of the individualization apparatus 6.

All land vehicles, water vessels and/or air crafts can be used as a transport means.

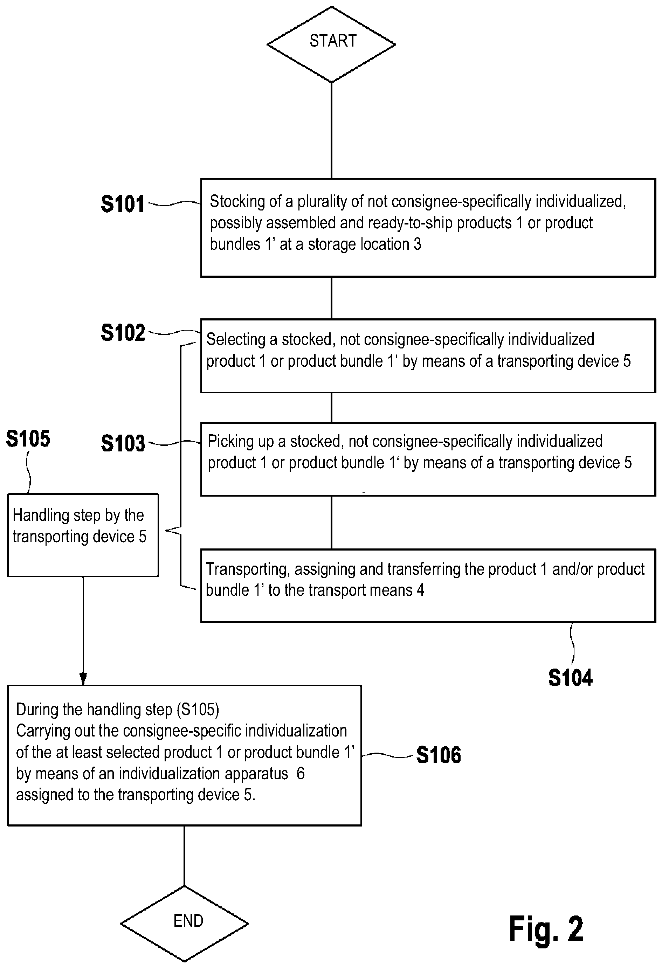

Figure 2 shows schematically a sequence diagram of the method according to the invention by way of example. In a first step S101, a stocking of a plurality of nonconsignee-specifically individualized, in particular, assembled and ready-to-ship products 1/product bundles 1' at a storage location 3 takes place. Products 1/product bundles 1' stored there are selected by a handling and transporting device 5 in a second step S102 (selection step) and are picked up in a third step S103 (pick up step). After such selecting, a transporting, an assigning and a transferring of the product 1/product bundle 1' to the transport means 4 is carried out in a third step S104.

Steps S102, S103, and S104 describe a handling step S105 of the products 1 and the product bundles 1' by the handling and transporting device 5. During the handling step S105 by the handling and transporting device 5, which - as described above - not only comprises the concrete touching/contacting handling of products 1/product bundles 1' by the handling and transporting device 5, according to the invention, the carrying out of the consignee-specific individualization of the at least one selected product 1/product bundle 1' by means of the individualization apparatus 6, which is assigned to the handling and transporting device 5, takes places in a step S106 (individualization step S106). Thus, the time from the selection/pickup to the transfer of the product 1/the product bundle 1' is, according to the invention, utilized for the consignee-specific individualization of products 1 or product bundles 1'. After the transfer of a consignee-specific individualized product 1 or product bundle 1' to a transport means 4, the method according to the invention is completed. The transfer is completed, when the handling and transporting device 5 can no longer act on the product 1/product bundle 1'.

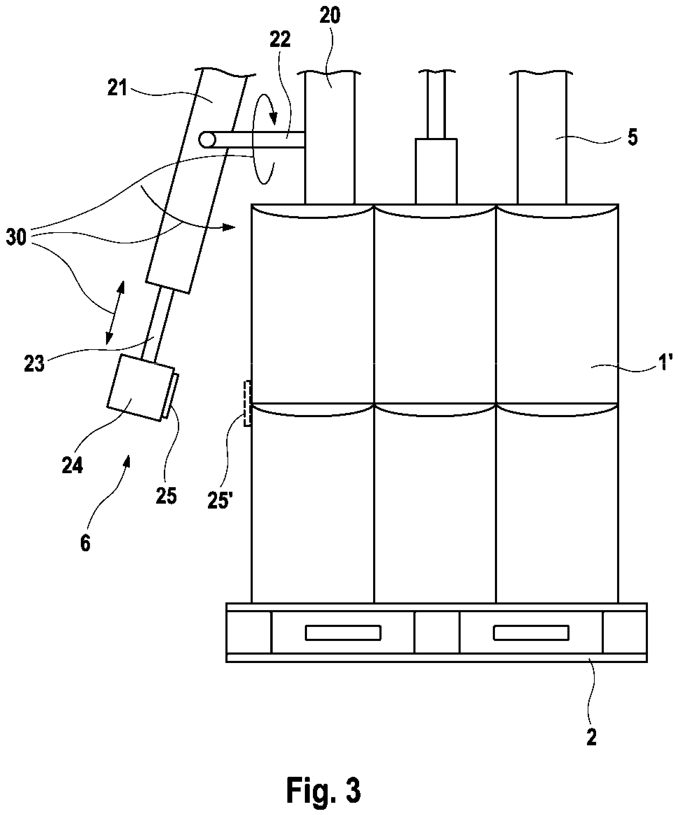

Figure 3 shows such an individualization apparatus 6 as a device for carrying out the individualization step (S106) of the method according to the invention. **In** figure 3, the product bundle 1' is on a pallet 2, wherein the pallet 2 has already been picked up by the handling and transporting device 5, which is shown in the form of a forklift. **In** the area of the handling and transporting device 5, the individualization apparatus 6 and the application device are arranged, for example, on a lifting mast 20 of the forklift. For example, a pivot or swivel arm 21 is pivotably arranged on a cantilever 22 of the lifting mast 20. The pivot or swivel arm 21 comprises a lifting plunger 23, on the free end of which the applicator carrier 24 is arranged. By means of suitable control and drive elements, the individualization apparatus 6 and the application device, for example, the pivot or swivel arm 21, the lifting plunger 23 and the applicator carrier 24, can be operated such that labels 25 prepared by means of the applicator carrier 24, i.e., labels containing consignee-specific information, can be attached to the product bundle 1' or the product 1. After being attached, such a label 25 remains on the product bundle 1' as consignee label 25', e.g., as SSCC label.

Expediently, the applicator carrier 24 can be freely positioned in the spatial path along the arrow directions 30, at least such that, by means of the individualization apparatus 6 and/or the application device the products 1/product bundles 1' can be accessed such that the consignee labels 25' can be attached to the products 1/product bundles 1' at suitable positions. In the event of transporting/handling several products 1/product bundles 1', expediently at least each product 1 or each product bundle 1' can be individualized by means of the individualization apparatus 6.

### Reference sign list

- 1: Product
- 1': Product bundle
- 2: Pallet
- 3: Storage location
- 4: Transport means
- 5: Handling and transporting device
- 6: Individualization apparatus
- 7: Label printer
- 8: Label applicator
- 9: Consignee information
- 11: Receiving equipment
- 10: Memory
- 20: Lifting mast
- 21: Pivot and swivel arm
- 22: Cantilever
- 23: Lifting plunger
- 24: Applicator carrier
- 25: Label
- 25': Consignee label
- 30: Arrow direction

- S101: First step (stocking)
- S102: Second step (selecting)
- S103: Third step (picking up)
- S104: Forth step (transporting/assigning/transferring)
- S105: Handling step
- S106: Individualization step

## Claims

1. A method for consignee-specific individualizing of a non-individualized product (1) or a non-individualized product bundle (1') by a manufacturer of the product (1) or product bundle (1') or by an entity downstream of the manufacturer in a supply chain, wherein a plurality of non-individualized products (1) or product bundles (1') is stocked and/or stored, at least one non-individualized product (1) or non-individualized product bundle (1')
- is picked up by means of a handling and transporting device (5) at a storage location (3) for the purpose of shipping to a consignee of the product (1) or product bundle (1'),
- is assigned to a transport means (4) by means of the handling and transporting device (5), and
- is transferred to the transport means (4) by means of the handling and transporting device (5), wherein
- during the handling and/or transporting (handling step S105) of the product (1) or the product bundle (1') by means of the handling and transporting device (5) the consignee-specific individualization , i.e. an individualization step (S106) is carried out and
- the consignee-specific individualization of the product (1) or the product bundle (1'), i.e. the individualization step (S106) is carried out by means of a device comprising an individualization apparatus (6) for generating individualization means and an application device for applying at least one of the generated individualization means on the non-individualized product (1) or the non-individualized product bundle (1'), whereas the device is assigned to and moved together with the handling and transporting device (5) from the storage location (3) to the transport means (4).

2. The method according to claim 1, wherein the non-individualized products (1) or the non-individualized product bundles (1') are stocked or stored pre-commissioned and ready for transportation.

3. The method according to claim 1 or 2, wherein the handling step (S105) already comprises selecting a single product (1) or product bundle (1') from the plurality of non-individualized products (1) or non-individualized product bundles (1') for the purpose of handling by means of the handling and transporting device (5) and/or the handling step (S105) also comprises a period after the transfer, e.g., placing the non-individualized product (1) or the non-individualized product bundle (1') in the transport means (4) or on the transport means (4), during which the handling and transporting device (5) can act on the non-individualized product (1) or the non-individualized product bundle (1').

4. The method according to any of the preceding claims, wherein the consignee-specific individualization is accomplished by applying/attaching an individualization means, e.g., a label (25) with consignee information (9), on the product (1) or the product bundle (1').

5. The method according to any of the preceding claims, wherein the non-individualized product (1) or the non-individualized product bundle (1') is stocked in a FIFO or LIFO warehouse.

6. The method according to any of the preceding claims, wherein the handling/transporting is accomplished by means of an industrial truck or a lifting device and/or a truck or a freight car for railway transportation (goods wagon) or a cable car or a ropeway carriage or a magnetic levitation system or a ship or an airplane is used as the transport means (4).

7. The method according to any of the preceding claims, wherein for the individualization of the product (1) or the product bundle (1'), the handling and transporting device (5) has an individualization apparatus (6), e.g., a label printer (7) and/or a label applicator (8), and wherein the individualization is accomplished by means of the individualization apparatus (6) during the handling step (S105) of the product (1) or the product bundle (1') by the handling and transporting device (5).

8. The method according to any of the preceding claims, wherein the individualization is accomplished prior to the transfer of the product (1) or the product bundle (1') to the transport means (4) or the individualization by the individualization apparatus (6) on the transporting device is accomplished after selecting a non-individualized product (1) or product bundle (1') while still in the warehouse, in particular in the FIFO or LIFO warehouse, preferably after the product (1) or product bundle (1') is picked up by the handling and transporting device (5).

9. The method according to any of the preceding claims, wherein during the handling step (S 105) by the handling and transporting device (5) several products (1) or product bundles (1') are individualized.

10. The method according to any of the preceding claims, wherein the method is applied to at least one of the products (1) from the group:
- solid objects
- stackable solid objects, such as mineral wool slabs, gypsum plaster boards or insulating boards,
- juxtaposable solid objects such as mineral wool slabs, gypsum plaster boards or insulating boards,
or to at least one or more product bundles (1') from the group:
- containers, boxes, sacks, barrels, bags, cans and/or buckets which are empty or at least partially containing bulk, free-flowing products or liquids, particularly IBC containers containing the same
- bundles of building materials
- bundles of mineral wool rolls
- bundles of mineral wool slabs
- bundles of solid objects.

11. A device for carrying out the individualization step (S106) of the method according to any of the preceding claims, the device comprising
- an individualization apparatus (6) for generating individualization means and
- an application device for applying at least one of the generated individualization means on the non-individualized product (1) or the non-individualized product bundle (1'), wherein the device is assigned to and movable together with a handling and transporting device (5) that is adapted and designed to pick up a non-individualized product (1) or product bundle (1') at a storage location (3) for the purpose of shipping the non-individualized product (1) or product bundle (1') to a consignee of the product (1) or product bundle (1'), to assign the non-individualized product (1) or product bundle (1') to a transport means (4), and to transfer the non-individualized product (1) or product bundle (1') to the transport means (4).

12. The device according to claim 11, wherein the individualization means are SSCC labels.

13. The device according one of the claims 11 or 12, wherein the device comprises a receiving apparatus (11) for consignee-specific information.

14. The device according to any of claims 11 to 13, wherein the application device comprises a pivot or swivel arm (21), a linearly displaceable lifting plunger (23) and/or an applicator carrier (24) that is movable in a freely programmable spatial path.

15. The device according to any of claims 11 to 14, wherein the individualization means, in particular the labels (25), are temporarily fixable to the applicator carrier (24) by means of adhesion or vacuum and are releasable from the applicator carrier (24).

## Patentansprüche

1. Verfahren zur empfängerbezogenen Individualisierung eines nichtindividualisierten Produkts (1) oder eines nicht individualisierten Produktbündels (1') durch einen Hersteller des Produkts (1) oder Produktbündels (1') oder durch eine dem Hersteller nachgelagerte Entität in einer Lieferkette, wobei eine Vielzahl von nichtindividualisierten Produkten (1) oder Produktbündeln (1') gelagert und/oder aufbewahrt wird, wobei zumindest ein nichtindividualisiertes Produkt (1) oder nichtindividualisiertes Produktbündel (1')
- mittels einer Handhabungs- und Transportvorrichtung (5) an einem Aufbewahrungsort (3) zum Zweck des Versands an einen Empfänger des Produkts (1) oder Produktbündels (1') aufgenommen wird,
- mittels der Handhabungs- und Transportvorrichtung (5) einem Transportmittel (4) zugeordnet wird und
- mittels der Handhabungs- und Transportvorrichtung (5) an das Transportmittel (4) übergeben wird,
wobei
- während der Handhabung und/oder dem Transport (Handhabungsschritt S105) des Produkts (1) oder des Produktbündels (1') mittels der Handhabungs- und Transportvorrichtung (5) die empfängerbezogene Individualisierung, d.h. ein Individualisierungsschritt (S106), ausgeführt wird und
- die empfängerspezifische Individualisierung des Produkts (1) oder des Produktbündels (1'), d. h. der Individualisierungsschritt (S106), mittels einer Vorrichtung ausgeführt wird, welche eine Individualisierungsvorrichtung (6) zum Erzeugen von Individualisierungsmitteln und eine Applikationsvorrichtung zum Aufbringen zumindest eines der erzeugten Individualisierungsmittel auf das nichtindividualisierte Produkt (1) oder das nichtindividualisierte Produktbündel (1') aufweist, wobei die Vorrichtung der Handhabungs- und Transportvorrichtung (5) zugeordnet wird und zusammen mit dieser vom Aufbewahrungsort (3) zum Transportmittel (4) bewegt wird.

2. Verfahren nach Anspruch 1, wobei die nichtindividualisierten Produkte (1) oder die nichtindividualisierten Produktbündel (1') vorab kommissioniert und transportbereit gelagert oder aufbewahrt werden.

3. Verfahren nach Anspruch 1 oder 2, wobei der Handhabungsschritt (S105) bereits das Auswählen eines einzelnen Produkts (1) oder Produktbündels (1') aus der Vielzahl von nichtindividualisierten Produkten (1) oder nichtindividualisierten Produktbündeln (1') zum Zwecke der Handhabung mittels der Handhabungs- und Transportvorrichtung (5) beinhaltet und/oder der Handhabungsschritt (S105) ebenfalls eine Zeitspanne nach der Übergabe, z. B. das Einlegen des nicht individualisierten Produkts (1) oder des nichtindividualisierten Produktbündels (1') in das Transportmittel (4) oder auf das Transportmittel (4), beinhaltet, während der die Handhabungs- und Transportvorrichtung (5) auf das nichtindividualisierte Produkt (1) oder das nichtindividualisierte Produktbündel (1') einwirken kann.

4. Verfahren nach einem der vorhergehenden Ansprüche, wobei die empfängerspezifische Individualisierung durch Aufbringen/Befestigen eines Individualisierungsmittels, z. B. eines Etiketts (25) mit Empfängerinformationen (9), auf dem Produkt (1) oder dem Produktbündel (1') erfolgt.

5. Verfahren nach einem der vorhergehenden Ansprüche, wobei das nichtindividualisierte Produkt (1) oder das nichtindividualisierte Produktbündel (1') in einem FIFO- oder LIFO-Lager gelagert wird.

6. Verfahren nach einem der vorhergehenden Ansprüche, wobei die Handhabung/der Transport mittels eines Flurförderzeugs oder einer Hebevorrichtung und/oder eines Lastkraftwagens oder eines Güterwaggons für einen Schienentransport (Güterwagen) oder einer Seilbahn oder eines Seilbahnwagens oder eines Magnetschwebesystems oder eines Schiffes oder eines Flugzeugs als verwendetes Transportmittel (4) erfolgt.

7. Verfahren nach einem der vorhergehenden Ansprüche, wobei zur Individualisierung des Produkts (1) oder des Produktbündels (1') die Handhabungs- und Transportvorrichtung (5) eine Individualisierungsvorrichtung (6), z. B. einen Etikettendrucker (7) und/oder einen Etikettenapplikator (8), aufweist, und wobei die Individualisierung mittels der Individualisierungsvorrichtung (6) während des Handhabungsschritts (S105) des Produkts (1) oder des Produktbündels (1') durch die Handhabungs- und Transportvorrichtung (5) erfolgt.

8. Verfahren nach einem der vorhergehenden Ansprüche, wobei die Individualisierung vor der Übergabe des Produkts (1) oder des Produktbündels (1') an das Transportmittel (4) erfolgt oder die Individualisierung durch die Individualisierungsvorrichtung (6) an der Transportvorrichtung nach der Auswahl eines nichtindividualisierten Produkts (1) oder Produktbündels (1') erfolgt, während es sich noch im Lager, insbesondere im FIFO- oder LIFO-Lager, befindet, vorzugsweise nachdem das Produkt (1) oder Produktbündel (1') von der Handhabungs- und Transportvorrichtung (5) aufgenommen worden ist.

9. Verfahren nach einem der vorhergehenden Ansprüche, wobei, während des Handhabungsschritts (S105) durch die Handhabungs- und Transportvorrichtung (5), mehrere Produkte (1) oder Produktbündel (1') individualisiert werden.

10. Verfahren nach einem der vorhergehenden Ansprüche, wobei das Verfahren auf zumindest eines der Produkte (1) aus der folgenden Gruppe angewendet wird:
- feste Gegenstände
- stapelbare feste Gegenstände, wie Mineralwolleplatten, Gipsplatten oder Dämmplatten,
- nebeneinander anordbare feste Gegenstände, wie Mineralwolleplatten, Gipsplatten oder Dämmplatten,
oder auf zumindest ein oder mehrere Produktbündel (1') aus der folgenden Gruppe angewendet wird:
- Behälter, Kisten, Säcke, Fässer, Beutel, Dosen und/oder Eimer, die leer sind oder zumindest teilweise Schüttgüter, frei fließende Produkte oder Flüssigkeiten enthalten, insbesondere IBC-Behälter, die diese enthalten
- Bündel von Baumaterialien
- Bündel von Mineralwollrollen
- Bündel von Mineralwolleplatten
- Bündel von festen Gegenständen.

11. Vorrichtung zur Ausführung des Individualisierungsschritts (S106) des Verfahrens nach einem der vorhergehenden Ansprüche, wobei die Vorrichtung folgende Merkmale aufweist:
- eine Individualisierungsvorrichtung (6) zum Erzeugen von Individualisierungsmitteln und
- eine Applikationsvorrichtung zum Aufbringen von zumindest einem der erzeugten Individualisierungsmittel an dem nichtindividualisierten Produkt (1) oder dem nichtindividualisierten Produktbündel (1'), wobei die Vorrichtung einer Handhabungs- und Transportvorrichtung (5) zugeordnet ist und zusammen mit dieser bewegbar ist, die dazu ausgelegt und gestaltet ist, ein nichtindividualisiertes Produkt (1) oder Produktbündel (1') an einem Aufbewahrungsort (3) aufzunehmen, um das nichtindividualisierte Produkt (1) oder Produktbündel (1') an einen Empfänger des Produkts (1) oder Produktbündels (1') zu versenden, das nichtindividualisierte Produkt (1) oder Produktbündel (1') einem Transportmittel (4) zuzuordnen und das nichtindividualisierte Produkt (1) oder Produktbündel (1') an das Transportmittel (4) zu übergeben.

12. Vorrichtung nach Anspruch 11, wobei die Individualisierungsmittel SSCC-Etiketten sind.

13. Vorrichtung nach einem der Ansprüche 11 oder 12, wobei die Vorrichtung eine Empfangsvorrichtung (11) für empfängerspezifische Informationen aufweist.

14. Vorrichtung nach einem der Ansprüche 11 bis 13, wobei die Applikationsvorrichtung einen Schwenk- oder Dreharm (21), einen linear verschiebbaren Hubkolben (23) und/oder einen Applikatorhalter (24) aufweist, der in einer frei programmierbaren räumlichen Bahn bewegbar ist.

15. Vorrichtung nach einem der Ansprüche 11 bis 14, wobei die Individualisierungsmittel, insbesondere die Etiketten (25), mittels Adhäsion oder Vakuum vorübergehend an dem Applikatorhalter (24) befestigbar und vom Applikatorhalter (24) lösbar sind.

## Revendications

1. Un procédé d'individualisation spécifique au destinataire d'un produit non individualisé (1) ou d'un ensemble de produits non individualisés (1') par un fabricant du produit (1) ou de l'ensemble de produits (1') ou par une entité en aval du fabricant dans une chaîne d'approvisionnement, dans lequel une pluralité de produits non individualisés (1) ou d'ensembles de produits (1') sont stockés et/ou entreposés, au moins un produit non individualisé (1) ou un lot de produits non individualisés (1')
- est prélevé au moyen d'un dispositif de manutention et de transport (5) à un emplacement de stockage (3) en vue de son expédition à un destinataire du produit (1) ou du lot de produits (1'),
- est affecté à un moyen de transport (4) au moyen du dispositif de manutention et de transport (5), et
- est transféré vers le moyen de transport (4) au moyen du dispositif de manutention et de transport (5),
dans lequel
- pendant la manutention et/ou le transport (étape de manutention S105) du produit (1) ou du lot de produits (1') à l'aide du dispositif de manutention et de transport (5), l'individualisation spécifique au destinataire, c'est-à-dire une étape d'individualisation (S106), est effectuée et
- l'individualisation spécifique au destinataire du produit (1) ou du lot de produits (1'), c'est-à-dire l'étape d'individualisation (S106), est effectuée au moyen d'un dispositif comprenant un appareil d'individualisation (6) pour générer des moyens d'individualisation et un dispositif d'application pour appliquer au moins l'un des moyens d'individualisation générés sur le produit non individualisé (1) ou l'ensemble de produits non individualisés (1'), tandis que le dispositif est attribué au dispositif de manipulation et de transport (5) et déplacé avec celui-ci depuis l'emplacement de stockage (3) vers le moyen de transport (4).

2. Le procédé selon la revendication 1, dans lequel les produits non individualisés (1) ou les lots de produits non individualisés (1') sont stockés ou entreposés pré-commandés et prêts à être transportés.

3. Le procédé selon la revendication 1 ou 2, dans lequel l'étape de manipulation (S105) comprend déjà la sélection d'un produit unique (1) ou d'un ensemble de produits (1') parmi la pluralité de produits non individualisés (1) ou d'ensembles de produits non individualisés (1') en vue de leur manipulation au moyen du dispositif de manipulation et de transport (5) et/ou l'étape de manipulation (S105) comprend également une période après le transfert, par exemple le placement du produit non individualisé (1) ou du lot de produits non individualisés (1') dans le moyen de transport (4) ou sur le moyen de transport (4), pendant laquelle le dispositif de manipulation et de transport (5) peut agir sur le produit non individualisé (1) ou le lot de produits non individualisés (1').

4. Le procédé selon l'une des revendications précédentes, dans lequel l'individualisation spécifique au destinataire est réalisée en appliquant/fixant un moyen d'individualisation, par exemple une étiquette (25) comportant des informations sur le destinataire (9), sur le produit (1) ou le lot de produits (1').

5. Le procédé selon l'une des revendications précédentes, dans lequel le produit non individualisé (1) ou le lot de produits non individualisés (1') est stocké dans un entrepôt FIFO ou LIFO.

6. Le procédé selon l'une des revendications précédentes, dans lequel la manutention/le transport est effectué au moyen d'un chariot industriel ou d'un dispositif de levage et/ou d'un camion ou d'un wagon de marchandises pour le transport ferroviaire (wagon de marchandises) ou d'un téléphérique ou d'un wagon de téléphérique ou d'un système à sustentation magnétique ou d'un navire ou d'un avion est utilisé comme moyen de transport (4).

7. Le procédé selon l'une des revendications précédentes, dans lequel, pour l'individualisation du produit (1) ou du lot de produits (1'), le dispositif de manipulation et de transport (5) comporte un appareil d'individualisation (6), par exemple une imprimante d'étiquettes (7) et/ou un applicateur d'étiquettes (8), et dans lequel l'individualisation est réalisée au moyen de l'appareil d'individualisation (6) pendant l'étape de manipulation (S105) du produit (1) ou du lot de produits (1') par le dispositif de manipulation et de transport (5).

8. Le procédé selon l'une des revendications précédentes, dans lequel l'individualisation est réalisée avant le transfert du produit (1) ou du lot de produits (1') vers le moyen de transport (4) ou l'individualisation par l'appareil d'individualisation (6) sur le dispositif de transport est réalisée après la sélection d'un produit (1) ou d'un lot de produits (1') non individualisé alors qu'il se trouve encore dans l'entrepôt, en particulier dans l'entrepôt FIFO ou LIFO, de préférence après que le produit (1) ou le lot de produits (1') a été prélevé par le dispositif de manutention et de transport (5).

9. Le procédé selon l'une des revendications précédentes, dans lequel, pendant l'étape de manipulation (S 105) par le dispositif de manipulation et de transport (5), plusieurs produits (1) ou lots de produits (1') sont individualisés.

10. Le procédé selon l'une des revendications précédentes, dans lequel le procédé est appliqué à au moins l'un des produits (1) du groupe :
- objets solides
- objets solides empilables, tels que des panneaux de laine minérale, des plaques de plâtre ou des panneaux isolants,
- objets solides juxtaposables, tels que des panneaux de laine minérale, des plaques de plâtre ou des panneaux isolants,
ou à au moins un ou plusieurs paquets de produits (1') du groupe :
- conteneurs, boîtes, sacs, barils, sachets, bidons et/ou seaux qui sont vides ou qui contiennent au moins partiellement des produits en vrac, fluides ou liquides, en particulier des conteneurs IBC contenant ceux-ci
- paquets de matériaux de construction
- paquets de rouleaux de laine minérale
- paquets de panneaux de laine minérale
- paquets d'objets solides.

11. Un dispositif destiné à mettre en œuvre l'étape d'individualisation (S106) du procédé selon l'une des revendications précédentes, le dispositif comprenant
- un appareil d'individualisation (6) destiné à générer des moyens d'individualisation et
- un dispositif d'application pour appliquer au moins l'un des moyens d'individualisation générés sur le produit non individualisé (1) ou le lot de produits non individualisés (1'), dans lequel le dispositif est associé à un dispositif de manipulation et de transport (5) adapté et conçu pour prélever un produit non individualisé (1) ou un lot de produits (1') à un emplacement de stockage (3) dans le but d'expédier le produit non individualisé (1) ou le lot de produits (1') à un destinataire du produit (1) ou du lot de produits (1'), d'attribuer le produit non individualisé (1) ou le lot de produits (1') à un moyen de transport (4), et de transférer le produit non individualisé (1) ou le lot de produits (1') vers le moyen de transport (4).

12. Le dispositif selon la revendication 11, dans lequel les moyens d'individualisation sont des étiquettes SSCC.

13. Le dispositif selon l'une des revendications 11 ou 12, dans lequel le dispositif comprend un appareil de réception (11) pour les informations spécifiques au destinataire.

14. Le dispositif selon l'une des revendications 11 à 13, dans lequel le dispositif d'application comprend un bras pivotant ou tournant (21), un piston de levage déplaçable linéairement (23) et/ou un support d'applicateur (24) qui est mobile selon une trajectoire spatiale librement programmable.

15. Le dispositif selon l'une des revendications 11 à 14, dans lequel les moyens d'individualisation, en particulier les étiquettes (25), peuvent être fixés temporairement au support d'applicateur (24) par adhérence ou par aspiration et peuvent être retirés du support d'applicateur (24).
